# EUROPÄISCHE PATENTSCHRIFT

(11) **EP 1 051 059 B1**
(45) Veröffentlichungstag und Bekanntmachung des Hinweises auf die Patenterteilung: **08.09.2004**
(21) Anmeldenummer: 00106286.8
(22) Anmeldetag: 23.03.2000
(51) Int. Cl.: H05B 3/42, H05B 3/40, H05B 3/48, H05B 3/26, H05B 3/46

(54) **Rohrartiges Heizelement**
Tube heating element
Elément chauffant en forme de tuyau

(30) Priorität: 06.05.1999 DE 19920825
(43) Veröffentlichungstag der Anmeldung: 08.11.2000
(73) Patentinhaber: Hotset Heizpatronen u. Zubehör GmbH, 58511 Lüdenscheid (DE)
(72) Erfinder: Schwarzkopf, Eugen, 58509 Lüdenscheid (DE)
(74) Vertreter: Köchling, Conrad-Joachim, Dipl.-Ing.

(56) Entgegenhaltungen:
- GB-A- 208 708
- US-A- 4 035 613
- US-A- 5 641 421

## Beschreibung

Die Erfindung betrifft ein rohrartiges elektrisches Heizelement zur Beheizung von zylindrischen oder rohrförmigen Gegenständen, insbesondere Düsen von Gieß- oder Spritzvorrichtungen für Kunststoff oder Metall.

Im Stand der Technik sind rohrartige Heizelemente bekannt. Solche rohrartigen Heizelemente werden aus Rohrabschnitten gebildet, auf die separat gefertigte biegbare Heizkörper wendelartig aufgewickelt werden. Als äußere Hülle ist dabei wiederum ein Rohrabschnitt vorgesehen. Eine solche Rohranordnung ist zwar brauchbar, jedoch für bestimmte Anwendungszwecke nur bedingt geeignet. Es ist nämlich nicht oder nur mit sehr großem Aufwand möglich, den entsprechenden Heizkörper in dem Rohrelement so anzuordnen, daß eine Beheizung des zu beheizenden Gegenstand in individuellen Bereichen möglich wäre.

Ferner ist aus der GB 208 708 A ein rohrartiges elektrisches Heizelement gemäß Oberbegriff des Anspruches 1 bekannt. Hierbei besteht das Heizelement aus einem zu einer Rohrform gebogenen Metallblech, mehreren Platten aus Isolierstoff, insbesondere Mika, sowie einem oder mehreren elektrischen Heizleitern in Form von Heizdrähten. Hierbei wird der Heizleiter zickzackförmig um eine innen liegende Platte aus Isolierstoff gewickelt, wobei die Anschlussenden an einer Randkante der Isolierstoffplatte abgeführt sind. Diese Isolierstoffplatte wird dann von weiteren Isolierstoffplatten umgeben, so dass der Heizleiter isoliert angeordnet ist. Der so gebildete isolierte Heizkörper wird dann zwischen die Mantelbleche eingebracht und das gesamte Element wird zu einer Rohrform umgeformt.

Bei dieser Anordnung ist es nur unzureichend möglich, die Leistungsverteilung nach einem bestimmten Muster einzustellen, da allenfalls die Wicklung des Heizdrahtes auf dem Isolierstoffelement in geringeren oder größeren Abständen erfolgen kann. Es ist aber nicht möglich, beispielsweise mittig der jeweiligen Isolierstoffplatte eine Wärmequelle mit höherer Leistung und außermittig eine Heizquelle mit geringerer Leistung vorzusehen. Zudem ist auch keine exakte Führung des Heizdrahtes an der Isolierstoffplatte ermöglicht, da der Heizdraht zwischen den Randkanten der Isolierstoffplatte, um die er gewickelt ist, relativ frei beweglich ist.

Ausgehend von diesem Stand der Technik liegt der Erfindung die Aufgabe zugrunde, ein rohrartiges Heizelement gattungsgemäßer Art zu schaffen, welches eine exakte Führung des Heizkörpers sowie eine exakte Leistungsverteilung auch bei komplizierten Bedingungen ermöglicht.

Zur Lösung dieser Aufgabe wird vorgeschlagen, dass der Heizkörper ein rohrförmiger, biegbarer elektrischer Heizkörper ist, der einen Mantel und einen im Mantel in einer Isolierstofffüllung isoliert angeordneten Heizleiter aufweist, dass das Mantelblech eine beliebig geformte, insbesondere mäanderartig geformte, Aufnahmenut aufweist, und dass in die Aufnahmenut der rohrförmige, biegbare, elektrische Heizkörper eingelegt oder eingepresst ist. Vorteilhafte Weiterbildungen sind in den Ansprüchen 2 bis 10 angegeben.

Ein bevorzugtes Verfahren zur Herstellung eines solchen rohrartigen Heizelementes ist im Anspruch 11 angegeben.

Gemäß der Erfindung wird zunächst das Mantelblech in entsprechender Form gegebenenfalls mit Randausschnitten oder dergleichen hergestellt. Anschließend kann in das Mantelblech eine entsprechend geführte Aufnahmenut eingebracht werden. Die Nut kann beispielsweise gefräst oder auf eine andere Weise hergestellt werden. Diese Aufnahmenut dient zur Aufnahme des eigentlichen elektrischen Heizkörpers. Der Heizkörper kann in die Aufnahmenut der noch ebenen Blechplatte eingelegt und gegebenenfalls mit der Nut verpresst werden, wobei vorzugsweise vorgesehen ist, dass der Heizkörper mit einem Teil seines Umfangs aus der Nut vorragt. Es ist in dieser Weise möglich, eine Aufnahmenut zu formen, die exakt auf die Bedingungen des zu beheizenden Gegenstandes abgestellt ist, wobei in diese Aufnahmenut dann der elektrische Heizkörper eingelegt ist, der also eine exakte Führung des Heizelementes und eine genaue Leistungsverteilung schon allein aufgrund der geometrischen Anordnung ermöglicht. Zudem ist durch das Mantelblech ein Schutz des elektrischen Heizkörpers gegen mechanische Beschädigungen gebildet. Das Mantelblech kann aus gut wärmeleitendem Material, beispielsweise Messing oder Aluminium, bestehen. Es ist aber auch möglich, das Mantelblech aus Edelstahl zu fertigen, sofern eine gewisse Wärmeisolationswirkung erreicht werden soll.

Der Heizkörper kann runden oder auch polygonalen, insbesondere quadratischen Querschnitt aufweisen.

Nach der flächigen Fertigung des Mantelbleches mit Aufnahmenut und Heizkörper kann das Mantelblech zu einer Rohrform rundgebogen werden. Beispielsweise kann das Biegen im Wege eines Walzvorganges vorgenommen werden. Vorzugsweise liegt dabei der Heizkörper im Innenmantel des so gebildeten fertigen rohrartigen Heizelementes. Das Heizelement kann dann auf einen zu beheizenden Gegenstand, beispielsweise eine Düse eines Spritzgießwerkzeuges oder eines Druckgußwerkzeuges, aufgeschoben werden und mittels eines separaten Spannbandes oder mittels eines am Mantelblech angebrachten Spannverschlusses fixiert werden.

Die Aufnahmenut des Mantelbleches ist dabei so ausgebildet, daß je nach Ausbildung des elektrischen Heizkörpers an einer Stelle, an der das Ende des Heizkörpers vorzugsweise über eine unbeheizte Zone austritt, die Nut randseitig offen ausläuft, so daß das Anschlußende des Heizkörpers hier ausgeführt werden kann. Es ist auch möglich, beide Enden des Heizkörpers mit entsprechenden elektrischen Anschlüssen zu versehen, so daß dann beide Enden des Heizkörpers über eine Ausmündung der Aufnahmenut ausgeführt werden können.

Vorzugsweise liegen diese Abgangsöffnungen achsparallel zur Mittellängsachse des fertigen rohrartigen elektrischen Heizelementes und vorzugsweise an der gleichen Stirnseite des Heizelementes.

Es ist aber auch eine radiale Abführung der Anschlußenden des Heizkörpers möglich, wobei an der Abgangsstelle beispielsweise eine Aussparung im Mantelblech vorzusehen ist.

Ein Ausführungsbeispiel der Erfindung ist in der Zeichnung dargestellt und im folgenden näher beschrieben.

Es zeigt:
- Figur 1: das Ausgangselement zur Herstellung eines rohrartigen elektrischen Heizelementes;
- Figur 2: das fertige rohrartige Heizelement in Stirnansicht.

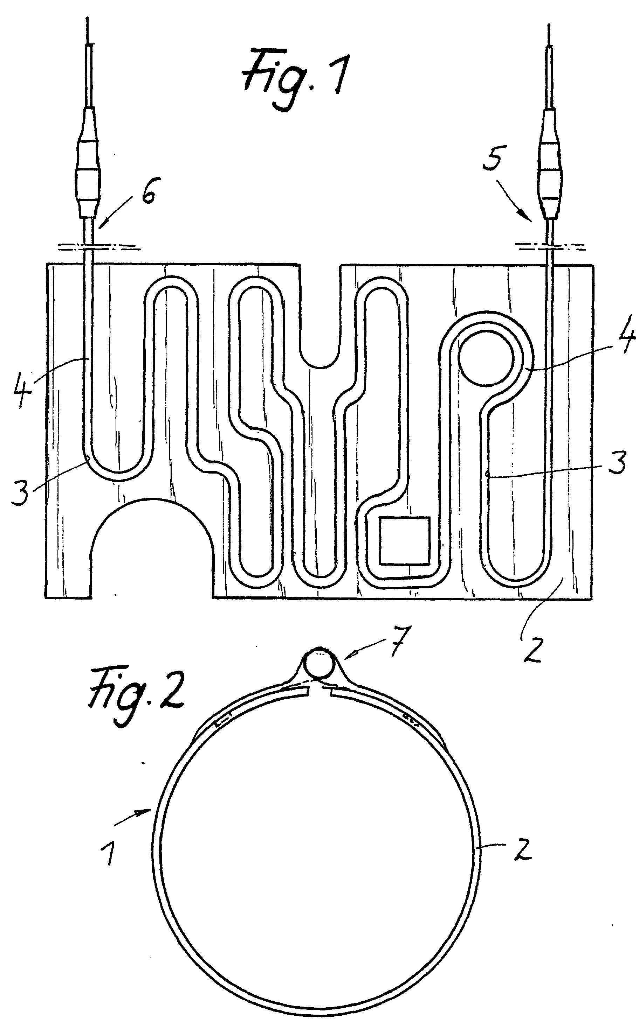

In der Zeichnung ist ein rohrartiges elektrisches Heizelement 1 gezeigt, welches zur Beheizung von zylindrischen oder rohrförmigen Gegenständen, beispielsweise von Düsen von Spritzgieß- oder Druckgußvorrichtungen benutzt werden kann. Das Heizelement besteht aus einem zu einer Rohrform gebogenen Mantelblech 2, das eine beliebige, auf den individuellen Einsatzzweck abgestimmt geformte Aufnahmenut 3 aufweist. Im Ausführungsbeispiel ist in Figur 1 das Mantelblech 2 in flächiger Form dargestellt und die entsprechende Aufnahmenut 3 in Draufsicht gezeigt. Das Mantelblech hat dabei Randausschnitte oder Ausnehmungen, entsprechend dem gewählten Einsatzzweck. In die Aufnahmenut 3 ist ein elektrischer Heizkörper 4 eingelegt, vorzugsweise eingepreßt, wobei der elektrische Heizkörper 4 zwei Anschlußenden 5, 6 aufweist, die axial an einer Randkante des Mantelbleches 2 bzw. des daraus geformten rohrförmigen Heizelementes 1 in einer unbeheizten Zone abgehen. An diese Anschlußenden sind Anschlußlitzen angeschlossen. Zusätzlich ist ein Verschlußmittel 7 vorgesehen, mittels dessen das zu einer Rohrform geformte Mantelblech 2 in der Sollform arretiert ist oder auch auf einen zu beheizenden Gegenstand aufgespannt werden kann.

Vorzugsweise weist das Mantelblech 2 eine größere Dicke auf als dem Durchmesser des Heizkörpers 4 entspricht. Der Heizkörper 4 kann dabei vorzugsweise so in die Aufnahmenut 3 eingebracht sein, daß ein Teil seines Mantels über die Ebene des Mantelbleches 2 aus der Nut vorragt. Die Aufnahmenut kann beispielsweise im Querschnitt schwalbenschwanzartig geformt sein, so daß der Heizkörper unter plastischer Verformung in die Nut eingepreßt werden kann und ein sicherer Sitz des Heizkörpers 4 in der Nut 3 gewährleistet ist.

Vorzugsweise besteht das Mantelblech aus gutwärmeleitendem Material, wie beispielsweise Messing, Aluminium oder Kupfer.

Bei der dargestellten Ausführungsform liegt der Heizkörper 4 bei dem fertigen rohrartigen Heizelement 1 zur Innenseite der Rohrform frei.

Das Verschlußmittel 7 kann ein die Stoßstelle des Mantelblechs 2 überbrückender Spannverschluß sein, wie in Figur 2 angedeutet.

Zur Herstellung des Heizelementes wird zunächst ein ebenes Mantelblech 2 gefertigt und mit einer Aufnahmenut 3 versehen, die beispielsweise in das Blech eingefräst werden kann. Die Aufnahmenut 3 kann dabei individuell auf die bestimmungsgemäße Führung des Heizkörpers 4 abgestimmt, eingebracht werden. In diese Aufnahmenut 3 kann dann bei noch flächigem Mantelblech 2 der Heizkörper 4 eingelegt und eingepreßt werden. Anschließend wird das Mantelblech 2 zu einer Rohrform rundgebogen, so daß die Form erreicht wird, wie sie in Figur 2 angedeutet ist.

Die Erfindung stellt damit ein rohrartiges elektrisches Heizelement 1 zur Verfügung welches hinsichtlich der Führung des Heizelementes 4 und der Leistungsverteilung der aufzubringenden Heizleistung individuell gestaltet werden kann und dabei dennoch eine relativ einfache Fertigung erlaubt.

## Patentansprüche

1. Rohrartiges elektrisches Heizelement (1) zur Beheizung von zylindrischen oder rohrförmigen Gegenständen, insbesondere Düsen von Gieß- oder Spritzvorrichtungen für Kunststoff oder Metall, wobei das Heizelement (1) aus einem zu einer Rohrform gebogenen Mantelblech (2) oder aus mehreren gekrümmten Mantelteilblechen, die zu einem rohrförmigen Mantelblech verbindbar sind, besteht, das einen biegbaren, elektrischen Heizkörper (4) aufweist, der Heizkörper (4) gegenüber dem Mantelblech (2) isoliert ist und die Anschlussenden (5,6) des Heizkörpers (4) axial von einer Randkante oder an beiden Randkanten des Mantelbleches abgehen, **dadurch gekennzeichnet, dass** der Heizkörper (4) ein rohrförmiger, biegbarer elektrischer Heizkörper (4) ist, der einen Mantel und einen im Mantel in einer Isolierstofffüllung isoliert angeordneten Heizleiter aufweist, dass das Mantelblech (2) eine beliebig geformte, insbesondere mäanderartig geformte, Aufnahmenut (3) aufweist, und dass in die Aufnahmenut (3) der rohrförmige, biegbare, elektrische Heizkörper (4) eingelegt oder eingepresst ist.

2. Heizelement nach Anspruch 1, **dadurch gekennzeichnet, dass** ein Verschlussmittel (7) vorgesehen ist, mittels dessen das rohrförmige Mantelblech (2) arretierbar oder auf einen zu beheizenden Gegenstand spannbar ist.

3. Heizelement nach Anspruch 1 oder 2, **dadurch gekennzeichnet, dass** das Mantelblech (2) eine größere Dicke aufweist als dem Durchmesser oder Querschnitt des Heizkörpers (4) entspricht.

4. Heizelement nach einem der Ansprüche 1 bis 3, **dadurch gekennzeichnet, dass** der Heizkörper (4) derart in die Aufnahmenut (3) eingebracht ist, dass ein Teil seines Mantels aus der Nut vorragt.

5. Heizelement nach einem der Ansprüche 1 bis 4, **dadurch gekennzeichnet, dass** die Aufnahmenut (3) im Querschnitt schwalbenschwanzartig geformt und der Heizkörper (4) in die Nut eingepresst ist.

6. Heizelement nach einem der Ansprüche 1 bis 5, **dadurch gekennzeichnet, dass** das Mantelblech (2) aus gut wärmeleitendem Metall besteht.

7. Heizelement nach einem der Ansprüche 1 bis 6, **dadurch gekennzeichnet, dass** die Aufnahmenut (3) im Inneren des rohrförmigen Mantelblechs (2) hin offen ist.

8. Heizelement nach einem der Ansprüche 1 bis 7, **dadurch gekennzeichnet, dass** das Verschlussmittel (7) ein um das rohrförmige Mantelblech (2) gelegtes Spannband oder ein am Mantelblech (2) angebrachter, die Stoßstelle überbrückender Spannverschluss ist.

9. Heizelement nach einem der Ansprüche 1 bis 8, **dadurch gekennzeichnet, dass** die Mantelteilbleche scharnierartig miteinander verbunden sind.

10. Heizelement nach einem der Ansprüche 1 bis 9, **dadurch gekennzeichnet, dass** jedes Mantelteilblech einen separaten, in dessen Aufnahmenut eingebrachten Heizkörper aufweist.

11. Verfahren zur Herstellung eines Heizelementes nach einem der Ansprüche 1 bis 10, **dadurch gekennzeichnet, dass** ein ebenes Mantelblech (2) mit einer Aufnahmenut (3) versehen wird, in die Aufnahmenut (3) ein rohrförmiger Heizkörper (4) eingelegt oder eingepresst wird und anschließend das Mantelblech (2) zu einer Rohrform rundgebogen wird.

## Claims

1. A tubular electrical heating element (1) for heating cylindrical or tubular objects, in particular nozzles of casting or injection-moulding devices for plastic or metal, wherein the heating element (1) consists of a sheet casing (2) bent to form a tube shape or of several curved sheet casing parts, which can be connected to form a tubular sheet casing comprising a flexible, electrical heating member (4), the heating member (4) is insulated from the sheet casing (2) and the connection ends (5, 6) of the heating member (4) protrude axially from one edge or both edges of the sheet casing,
**characterised in that** the heating member (4) is a tubular, flexible electrical heating member (4), which comprises a casing and a heat conductor disposed in insulated fashion in the casing in the insulation filling,
**in that** the sheet casing (2) comprises a housing groove (3) which is shaped at will, in particular in meandering manner,
and **in that** the tubular, flexible electrical heating member (4) is inserted or pressed into the housing groove (3).

2. A heating element according to Claim 1,
**characterised in that** a closure means (7) is provided, by means of which the tubular sheet casing (2) can be retained or can be clamped on an object to be heated.

3. A heating element according to Claim 1 or 2,
**characterised in that** the sheet casing (2) has a greater thickness than corresponds to the diameter or cross section of the heating member (4).

4. A heating element according to one of Claims 1 to 3,
**characterised in that** the heating member (4) is inserted into the housing groove (3) in such a manner that a part of its casing protrudes from the groove.

5. A heating element according to one of Claims 1 to 4,
**characterised in that** the housing groove (3) is shaped with a dovetail cross section and the heating member (4) is pressed into the groove (4).

6. A heating element according to one of Claims 1 to 5,
**characterised in that** the sheet casing (2) is made from metal which is a good conductor of heat.

7. A heating element according to one of Claims 1 to 6,
**characterised in that** the housing groove (3) is open towards the interior of the tubular sheet casing (2).

8. A heating element according to one of Claims 1 to 7,
**characterised in that** the closure means (7) is a tightening strap laid around the tubular sheet casing (2) or a toggle-type closure mounted on the sheet casing (2) and bridging the location of the joint.

9. A heating element according to one of Claims 1 to 8,
**characterised in that** the sheet casing parts are connected to one another in the manner of a hinge.

10. A heating element according to one of Claims 1 to 9,
**characterised in that** each sheet casing part comprises a separate heating member inserted into its housing groove.

11. A method for the manufacture of a heating element according to one of Claims 1 to 10,
**characterised in that** a flat sheet casing (2) is provided with a housing groove (3), a tubular heating member (4) is inserted or pressed into the housing groove (3) and then the sheet casing (2) is curved around to form a tube shape.

## Revendications

1. Élément chauffant (1) électrique en forme de tuyau, pour le chauffage d'objets cylindriques ou tubulaires, en particulier de buses, de dispositifs de moulage par gravité ou par injection, pour de la matière synthétique ou du métal, l'élément chauffant (1) étant formé d'une tôle d'enveloppe (2), cintrée pour produire une forme tubulaire, ou d'une pluralité de tôles partielles d'enveloppe incurvées, susceptibles d'être reliées pour former une tôle d'enveloppe tubulaire, qui présente un corps chauffant (4) électrique flexible, le corps chauffant (4) étant isolé par rapport à la tôle d'enveloppe (2) et les extrémités de raccordement (5, 6) du corps chauffant (4) partant axialement d'une arête de bordure ou des deux arêtes de bordure de la tôle d'enveloppe, **caractérisé en ce que** le corps chauffant (4) est un corps chauffant (4) électrique flexible, tubulaires présentant une enveloppe et un conducteur chauffant, disposé de façon isolée dans l'enveloppe, dans un remplissage en matériau isolant, **en ce que** la tôle d'enveloppe (2) présente une rainure de logement (3) de forme quelconque, en particulier en forme de méandres, et **en ce que** le corps chauffant (4) électrique flexible, tubulaire, est inséré ou enfoncé dans la rainure de logement (3).

2. Élément chauffant selon la revendication 1, **caractérisé en ce qu'**un moyen de fermeture (7) est prévu, au moyen duquel la tôle d'enveloppe (2) tubulaire peut être fixée ou bien peut être serrée sur un objet à chauffer.

3. Élément chauffant selon la revendication 1 ou 2, **caractérisé en ce que** la tôle d'enveloppe (2) présente une épaisseur supérieure au diamètre ou à la section transversale du corps chauffant (4).

4. Élément chauffant selon l'une des revendications 1 à 3, **caractérisé en ce que** le corps chauffant (4) est introduit dans la rainure de logement (3), de telle manière qu'une partie de son enveloppe ressorte de la rainure.

5. Élément chauffant selon l'une des revendications 1 à 4, **caractérisé en ce que** la rainure de logement (3) a une section transversale en forme de queue d'aronde et le corps chauffant (4) est enfoncé dans la rainure.

6. Élément chauffant selon l'une des revendications 1 à 5, **caractérisé en ce que** la tôle d'enveloppe (2) est formée d'un matériau bon conducteur de la chaleur.

7. Élément chauffant selon l'une des revendications 1 à 6, **caractérisé en ce que** la rainure de logement (3) débouche à l'intérieur de la tôle d'enveloppe (2) tubulaire.

8. Élément chauffant selon l'une des revendications 1 à 7, **caractérisé en ce que** le moyen de fermeture (7) est une bande de serrage, placée autour de la tôle d'enveloppe (2) tubulaire, ou bien une fermeture de serrage, rapportée sur la tôle d'enveloppe (2) et pontant le point de jointoiement.

9. Élément chauffant selon l'une des revendications 1 à 8, **caractérisé en ce que** les tôles partielles d'enveloppe sont reliées ensemble à la façon d'une charnière.

10. Élément chauffant selon l'une des revendications 1 à 9, **caractérisé en ce que** chaque tôle partielle d'enveloppe présente un corps chauffant séparé, introduit dans sa rainure de logement.

11. Procédé de fabrication d'un élément chauffant selon l'une des revendications 1 à 10, **caractérisé en ce qu'**une tôle d'enveloppe (2) plane est munie d'une rainure de logement (3), un corps chauffant (4) tubulaire est inséré ou enfoncé dans la rainure de logement (3), et la tôle d'enveloppe (2) est ensuite cintrée à la forme ronde, pour produire une forme tubulaire.
